# EUROPÄISCHE PATENTSCHRIFT

(11) **EP 1 062 287 B1**
(45) Veröffentlichungstag und Bekanntmachung des Hinweises auf die Patenterteilung: **03.07.2002**
(21) Anmeldenummer: 99914504.8
(22) Anmeldetag: 05.03.1999
(51) Int. Cl.: C09D 167/00, C09D 163/00, C09D 7/12

(54) **ÜBERZUGSMITTEL UND DEREN VERWENDUNG ZUR HERSTELLUNG VON MEHRSCHICHTLACKIERUNGEN**
COATING AGENTS AND THEIR USE IN THE PRODUCTION OF MULTILAYER COATINGS
AGENTS DE RECOUVREMENT ET LEUR UTILISATION POUR LA REALISATION DE REVETEMENTS CONSTITUES DE PLUSIEURS COUCHES DE LAQUE

(30) Priorität: 10.03.1998 DE 19810220
(43) Veröffentlichungstag der Anmeldung: 27.12.2000
(73) Patentinhaber: E.I. DU PONT DE NEMOURS & COMPANY INCORPORATED, Wilmington, Delaware 19898 (US)
(72) Erfinder: DAHM, Ralf, D-42929 Wermelskirchen (DE); FLOSBACH, Carmen, D-42287 Wuppertal (DE); KERBER, Hermann, D-42369 Wuppertal (DE); SCHUBERT, Walter, D-42349 Wuppertal (DE); TÜCKMANTEL, Astrid, D-42277 Wuppertal (DE)
(74) Vertreter: Gille Hrabal Struck Neidlein Prop Roos
(86) Internationale Anmeldenummer: EP9901552
(87) Internationale Veröffentlichungsnummer: WO9946345

(56) Entgegenhaltungen:
- EP-A- 0 442 336
- WO-A-95/27012
- DE-A- 4 236 901
- DE-A- 4 237 658
- DE-A- 4 310 413
- DE-B- 3 022 996
- DATABASE WPI Section Ch, Week 9343 Derwent Publications Ltd., London, GB; Class A25, AN 93-339923 XP002109989 & JP 05 247387 A (KYOEISHA KAGAKU KK), 24. September 1993 (1993-09-24)
- DATABASE WPI Section Ch, Week 9326 Derwent Publications Ltd., London, GB; Class A82, AN 93-208944 XP002109990 & JP 05 132636 A (DAINIPPON INK & CHEM KK) , 28. Mai 1993 (1993-05-28)

## Beschreibung

Die Erfindung betrifft Überzugsmittel, deren Verwendung bei der Herstellung von Mehrschichtlackierungen, beispielsweise auf dem Kraftfahrzeugsektor, insbesondere bei der Herstellung von Zweischichtlackierungen vom Basislack/Klarlack-Typ.

Unter Esterbildung aushärtende Überzugsmittel auf Basis einer Kombination von epoxidfunktioneller Komponente und carboxylfunktioneller Komponente sind bekannt. Sie zeichnen sich aus durch gute Chemikalien- und Säurefestigkeit der aus ihnen erstellten und eingebrannten Überzüge und sind daher besonders geeignet als Klaroder Decklacke bei der Automobilserienlackierung.

Beispielsweise aus der DE-A-30 22 996 ist ein Einbrennlack bekannt, bei dem carboxylgruppenhaltige Polymere, wie z.B. (Meth)acrylcopolymere auf Basis Acrylsäure oder Methacrylsäure und glycidylgruppenhaltiger Acrylatharze zu einer härtbaren Zusammensetzung vermischt sind.

Auch die DE-A-42 37 658 beschreibt Einbrennlacksysteme auf Basis von Carboxylgruppen enthaltenden Komponenten und Epoxidgruppen enthaltenden Komponenten. Hier sind die Carboxylgruppen mit Lacton zur Reaktivitätserhöhung kettenverlängert.

Der optisch-ästhetische Eindruck von Basislack/Klarlack-Zweischichtlackierungen wird wesentlich durch die Qualität der Klarlackschicht beeinflußt. Im Idealfall ist die Struktur der Klarlackschicht an waagerechten und senkrechten Flächen eines dreidimensionalen Substrats, beispielsweise einer Automobilkarosse gleich. Der beschriebene Idealfall läßt sich in der Praxis jedoch nicht ohne weiteres erreichen. Beispielsweise kann es zur Ausbildung von Unterschieden in der Oberflächenstruktur oder im Verlauf der äußeren Klarlackschicht kommen, da die Klarlacke nach ihrer Applikation und insbesondere während der Aufheizphase beim Einbrennprozeß als Folge einer temperaturbedingten Viskositätserniedrigung zum Ablaufen oder Absacken an außerhalb der Waagerechten befindlichen Flächen neigen. Diese Gefahr ist um so höher, je höher die Klarlackschichtdicke ist.

Aus DE-C-27 51 761 und EP-A-0 198 519 ist es bekannt, bestimmte Harnstoffverbindungen als Additive in aminoplastharzhärtenden Einbrennlacken auf Basis hydroxylfunktioneller Bindemittel einzusetzen, um unerwünschten Ablauferscheinungen des Lacks beim Einbrennen entgegenzuwirken. Aus EP-A-0 192 304 ist es zusätzlich bekannt, Harnstoffverbindungen als Antiablaufmittel in Lacken einzusetzen, die hydroxylfunktionelle Bindemittel und Aminoplastharze oder freie oder blockierte Polyisocyanate als Vernetzer enthalten. Die Chemikalienfestigkeit, insbesondere die Säurefestigkeit der aus diesen Überzugsmitteln hergestellten eingebrannten Überzugsschichien ist verbesserungsbedürftig.

Aufgabe der Erfindung ist die Bereitstellung von Überzugsmitteln, die eine verminderte Ablaufneigung auch bei der Applikation in höheren Schichtstärken aufweisen und die im eingebrannten Zustand zu Überzügen mit guter Säure- und Chemikalienfestigkeit führen. Die Überzugsmittel sollen insbesondere als Einbrennüberzugsmittel zur Erstellung der äußeren Klar- oder Decklackschicht einer Mehrschichtlackierung geeignet sein.

Die Aufgabe wird gelöst durch härtbare Überzugsmittel, enthaltend Bindemittel und Vernetzer, ein oder mehrere organische Lösemittel, Antiablaufmittel, sowie gegebenenfalls Pigmente und/oder Füllstoffe und gegebenenfalls weitere lackübliche Additive, wobei als Bindemittel 20 bis 80 Gew.-% einer oder mehrerer carboxylfunktioneller Komponenten A) ausgewählt aus carboxylfunktionellen (Meth)acrylcopolymeren und/oder carboxylfunktionellen Polyestern, deren Carboxylfunktionalität jeweils einer Säurezahl von 20 bis 300 mg KOH/g entspricht, und 20 bis 80 Gew.-% eines oder mehrerer epoxidfunktioneller Vernetzer B) enthalten sind, wobei sich die Gew.-% zu 100 Gew.-% addieren, die dadurch gekennzeichnet sind. aaß 0.1 bis 3 Gew - %, bezogen auf den Harzfestkorper, einer oder mehrerer zuvor in Gegenwart zumindest eines Teils des oder der epoxidfunktionellen Vernetzer B) hergestellter, im Überzugsmittel unlöslicher, fester Harnstoffverbindungen D) als Antiablaufmittel enthalten sind, wobei sich sämtliche Gew.-%-Angaben jeweils auf den Feststoffgehalt beziehen.

Das Bindemittel/Vernetzersystem der erfindungsgemäßen Überzugsmittel enthält die Komponenten A) und B) als wesentliche Komponenten sowie gegebenenfalls die nachstehend erläuterten optionalen Komponenten C) und/oder E) und/oder F). Beispielsweise können die erfindungsgemäßen Überzugsmittel nur die Komponenten A) und B) als Bindemittel/Vernetzersystem enthalten oder das Bindemittel/Vernetzersystem der erfindungsgemäßen Überzugsmittel enthält zusätzlich die optionalen Komponenten C) und/oder E) und/oder F). Der Harzfestkörper der erfindungsgemäßen Überzugsmittel wird gebildet aus der Summe der Harzfestkörper bzw. der nichtflüchtigen Anteile der Komponenten A), B) und der nachstehend erläuterten optionalen Komponenten C). E) und F).

Die Härtung der erfindungsgemäßen Überzugsmittel beruht auf der während des Einbrennens stattfindenden chemischen Reaktion der zueinander komplementär reaktiven Gruppen der Komponenten A) und B); es handelt sich dabei um eine Addition der Carboxyl- an die Epoxidgruppen unter Ausbildung von Carbonsäureesterbindungen.

Die vorliegende Erfindung stellt härtbare Überzugsmittel bereit, mit denen die gestellte Aufgabe gelöst werden kann. Es war keineswegs zu erwarten, daß die Lösung der Aufgabe gelingt, wenn die Synthese der Harnstoffverbindungen D) aus entsprechenden Amin- und Isocyanatverbindungen, wie später näher erläutert, in Gegenwart epoxidfunktioneller Vernetzer B) durchgeführt wird. Überraschenderweise gelingt die Lösung der Aufgabe, obwohl die Harnstoffverbindungen D) in Gegenwart von gegenüber Aminverbindungen reaktiven, epoxidfunktionellen Vernetzern B) hergestellt werden. Es ist vorteilhaft, daß die epoxidfunktionellen Vernetzer B), die selber Bestandteil des erfindungsgemäßen Überzugsmittels sind, als Reaktionsmedium für die Synthese der Harnstoffverbindungen D) verwendet werden konnen. Eine Synthese der Harnstoffverbindungen D) in einem separaten Reaktionsmedium, dessen Zugabe zum die Komponenten A) und B) enthaltenden Bindemittel/Vernetzersystem der erfindungsgemäßen Überzugsmittel eventuell unerwünscht wäre oder gegebenenfalls sogar stören würde, ist nicht notwendig.

Die erfindungsgemäßen Überzugsmittel enthalten als Komponente A) eine oder mehrere carboxylfunktionelle Komponenten A). Bei der carboxylfunktionellen Komponente A) der erfindungsgemäßen Überzugsmittel handelt es sich um carboxylfunktionelle (Meth)acrylcopolymere und/oder carboxylfunktionelle Polyester, deren Carboxylfunktionalität jeweils einer Säurezahl von 20 bis 300 mg KOH/g entspricht. Die carboxylfunktionellen (Meth)acrylcopolymeren und/oder carboxylfunktionellen Polyester können urethanisiert und/oder durch Umsetzung mit Lactonen modifiziert sein.

Die gegebenenfalls urethangruppenhaltigen carboxylfunktionellen (Meth)acrylcopolymeren der Komponente A) weisen bevorzugt ein Zahlenmittel des Molgewichts (Mn) von 1000 bis 30000 g/mol auf. Die gegebenenfalls urethangruppenhaltigen carboxylfunktionellen Polyester der Komponente A) weisen bevorzugt ein errechnetes Molgewicht von 500 bis 4000 g/mol auf. Die Säurezahl liegt jeweils bei 20 bis 300 mg KOH/g, bevorzugt bei 30 bis 250 mg KOH/g.

Bei der Herstellung der carboxylgruppenhaltigen (Meth)acrylcopolymeren oder Polyester der Komponente A), die gegebenenfalls jeweils Urethangruppen enthalten können, können die Carboxylgruppen direkt durch Verwendung carboxylgruppenhaltiger Bausteine eingeführt werden. Beispiele für zum Aufbau von carboxylgruppenhaltigen (Meth)acrylcopolymeren verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure. Halbester der Malein- und Fumarsäure sowie Carboxyalkylester der (Meth)acrylsäure, z.B. beta-Carboxyethylacrylat und Addukte von Hydroxyalkyl(meth)acrylaten mit Carbonsäureanhydriden, wie z.B. der Phthalsäure-mono-2-(meth)acryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung von carboxylgruppenhaltigen und gegebenenfalls urethangruppenhaltigen (Meth)acrylcopolymeren oder Polyestern der Komponente A) ist es aber auch möglich, zunächst ein Hydroxylgruppen und gegebenenfalls auch schon Carboxylgruppen enthaltendes Polymer aufzubauen und die Carboxylgruppen ganz oder teilweise in einer zweiten Stufe durch Umsetzung mit Carbonsäureanhydriden einzuführen. Bei dieser Arbeitsweise kann mit solchen Mengenverhältnissen gearbeitet werden, daß gegebenenfalls genügend Hydroxylgruppen übrig bleiben, um eine Urethanisierung durchführen zu können.

Für die Addition an die hydroxylgruppenhaltigen Polymeren, die bereits Carboxylgruppen enthalten können, geeignete Carbonsäureanhydride sind die Anhydride von Di- und Polycarbonsäuren, wie beispielsweise bevorzugt Phthalsäure-, Tetrahydro-. Methylhexahydro- und Hexahydrophthalsäureanhydrid.

Zur Einführung von Hydroxylgruppen in die gegebenenfalls urethangruppenhaltigen (Meth)acrylcopolymeren der Komponente A) geeignete Monomere sind beispielsweise Hydroxylalkyl(meth)acrylate wie z.B. Hydroxyethyl(meth)acrylat, sowie die bezüglich der Stellung der Hydroxylgruppe isomeren Hydroxypropyl(meth)acrylate und Hydroxybutyl(meth)acrylate.

Als hydroxylfunktionelle Komponente kann zumindest teilweise auch ein Umseizungsprodukt aus (Meth)acrylsäure mit dem Glycidylester einer Carbonsäure mit einem tertiären alpha-Kohlenstoffatom eingesetzt werden. Glycidylester stark verzweigter Monocarbonsäuren sind beispielsweise unter dem Handelsnamen "Cardura" erhältlich. Die Umsetzung der Acrylsäure oder Methacrylsäure mit dem Glycidylester einer Carbonsäure mit einem teniären alpha-Kohlenstoff kann von während oder nach der Polymerisationsreaktion erfolgen.

Bei der Herstellung der (Meth)acrylcopolymeren der Komponente A) können neben den vorstehend genannten Monomeren auch weitere olefinisch ungesättigte Monomere verwendet werden. insbesondere solche, die neben einer olefinischen Doppelbindung keine weiteren funktionellen Gruppen enthalten. Die Auswahl der weiteren olefinisch ungesättigten Monomeren ist nicht kritisch, es können die zur Polymerisation üblichen olefinischen Monomeren mit oder ohne weitere funktionelle Gruppen eingesetzt werden. Die Monomeren werden in dem Fachmann geläufiger Weise bevorzugt so ausgewählt, daß ihr Einbau nicht zu unerwünschten Eigenschaften des Copolymerisats führt.

Als weitere olefinisch ungesättigte Monomere geeignet sind beispielsweise insbesondere Alkylester der (Meth)acrylsäure, wie z.B. Methyl(meth)acrylat, Ethyl(meth)acrylat, Propyl(mem)acrylat, Butyl(meth)acrylat, Isopropyl(meth)acrylat, Isobutyl(meth)acrylat, tertiär-Butyl(meth)acrylat, Hexyl(meth)acrylat, Cyclohexyl(meth)acrylat, 2-Ethylhexyl(meth)acrylat, Decyl(meth)acrylat, Hexadecyl(meth)acrylat.

Anstelle der vorstehend genannten (Meth)acrylsäurealkylester oder zusammen mit diesen können zur Herstellung von (Meth)acrylcopolymerisaten der Komponente A) weitere olefinisch ungesättigte Monomere eingesetzt werden, wobei sich die Auswahl dieser Monomeren weitgehend nach den gewünschten Eigenschaften der Überzugsmittel in Bezug auf Härte, Elastizität, Verträglichkeit und Polarität richtet.

Beispiele für weitere, geeignete olefinisch ungesättigte Monomere sind die Alkylester der Malein-. Fumar-, Tetrahydrophthal-, Croton-, Isocroton-, Vinylessig- und Itaconsäure, wie z.B. die entsprechenden Methyl-, Ethyl, Propyl, Butyl, Isopropyl-, Isoburyl-, Penryl-, Amyl-, Isoamyl-, Hexyl-, Cyclohexyl-, 2-Ethylhexyl-, Octyl-, Decyl-, Dodecylester.

Weiterhin können auch kleine Anteile von Monomeren mit mindestens zwei polymerisierbaren, olefinisch ungesättigten Doppelbindungen eingesetzt werden. Bevorzugt liegt der Anteil dieser Monomeren unter 5 Gew.-%. bezogen auf das Gesamtgewicht der Monomeren.

Beispiele für derartige Verbindungen sind Hexandioldi(merh)acrylat, Ethylenglykoldi(meth)acrylat, Butandioldi(meth)acrylat, Hexamethylenbis(meth)acrylamid, Trimethylolpropantri(meth)acrylat, Divinylbenzol und ähnliche Verbindungen.

Eine weitere geeignete Komponente sind monovinylaromatische Verbindungen. Vorzugsweise enthalten sie 8 bis 9 Kohlenstoffatome je Molekül. Beispiele für geeignete Verbindungen sind Styrol, Vinyltoluol, alpha-Methylstyrol sowie die isomeren Methylstyrole. Bevorzugt werden Vinyltoluole sowie insbesondere Styrol eingesetzt. Ebenfalls möglich ist die Verwendung von silanmodifizierten Monomeren. wie z.B. gamma-Methacryloxypropyltrimethoxysilan.

Die Herstellung der (Meth)acrylcopolymeren der carboxylfunktionelien Komponente A) erfolgt durch radikalische Copolymerisation. Dabei kann es sich als vorteilhaft erweisen, einen Teil der Monomeren zeitversetzt zueinander zuzudosieren.

Zur Herstellung der (Meth)acrylcopolymeren der Komponente A) können die Monomeren oder das eingesetzte Monomerengemisch Radikalinitiatoren enthalten. Sofern Radikalinitiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum, z.B. während mehrerer Stunden nachpolymerisiert werden. Es ist dann möglich, mit einem üblichen Lacklösemittel auf einen gewünschten Feststoffgehalt, beispielsweise in der Größenordnung von 30 bis 80 Gew.-%, beispielsweise 50 bis 60 Gew.- % einzustellen.

Die Herstellung erfolgt beispielsweise als radikalische Lösungspolymerisation in Anwesenheit eines Radikalinitiators, wie sie dem Fachmann geläufig ist. Beispiele für Radikalinitiatoren sind Dialkylperoxide, Diacylperoxide, Hydroperoxide, Perester, Peroxiddicarbonate, Perketale, Ketonperoxide, Azoverbindungen, wie 2,2'-Azo-bis-(2,4-dimethyl-valeronitril), Azo-bis-isobutyronitril, C-C-spaltende Initiatoren wie z.B. Benzpinakol-Derivate.

Die Polymerisationsinitiatoren werden im allgemeinen beispielsweise in einer Menge von 0.1 bis 4 Gew.-%, bezogen auf die Monomeren-Einwaage, zugesetzt.

Zur möglichen Urethanisierung der carboxyfunktionalisierten (Meth)acrylcopolymeren der Komponente A) können in einem weiteren Reaktionsschritt Hydroxylgruppen der carboxylfunktionalisierten (Meth)acrylcopolymeren der Komponente A) mit Mono-, Di-, Tri- oder Polyisocyanaten umgesetzt werden. Beispiele für zur Urethanisierung einsetzbare Isocyanate sind Phenylisocyanat, sowie die nachstehend bei der Beschreibung der Zusatzvernetzer E) beispielhaft genannten Polyisocyanate und deren durch Umsetzung mit bezogen auf den Isocyanatgehalt unterstöchiometrischen Mengen an Monoalkoholen erhältliche Defunktionalisierungsprodukte. Die Menge der zur Urethanisierung verwendeten Di-, Tri- oder Polyisocyanate wird in dem Fachmann geläufiger Weise so gewählt, daß ein Gelieren vermieden wird. Natürlich ist es ebenfalls möglich, hydroxylfunktionelle (Meth)acrylcopolymere vor der Einführung von Carboxylgruppen durch Umsetzung mit Säureanhydriden zu urethanisieren.

Die carboxylgruppenhaltigen und gegebenenfalls urethangruppenhaltigen Polyester der Komponente A) können nach üblichen Methoden aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren, insbesondere Dicarbonsäuren, sowie höherwertigen Polycarbonsäuren. Beispiele für geeignete Alkohole sind aliphatische Diole, wie Elhylenglykol, 1,2-Propandiol, 1,3-Propandiol, 2,2-Diethyl-1,3-propandiol, die isomeren Butandiole, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, mehrwertige aliphatische Alkohole, wie Glycerin, Trimethylolethan, Trimethylolpropan, Ditrimethylolpropan, Pentaerythrit, sowie Veretherungsprodukte von Dioien und Polyolen. z.B. Di- und Triethylenglykol, Polyethylenglykol,

Neopentylglykolester von Hydroxypivalinsäure.

Beispiele für geeignete Carbonsäuren sind Adipin-, Azelain-, 1,3- und 1,4-Cyclohexandicarbonsäure, Tetrahydrophthal-, Hexahydrophthal-, Endomethyltetrahydrophthalsäure, die isomeren Phthalsäuren bzw, deren Anhydride sowie deren veresterungsfähige Derivate.

Ebenso wie die bereits beschriebenen carboxylfunktionellen (Meth)acrylcopolymeren der Komponente A) können die carboxylfunktionellen Polyester der Komponente A) urethanisiert werden. Die Reaktionsbedingungen und die verwendbaren Polyisocyanate sind die gleichen wie bei den (Meth)acrylcopolymeren. Möglich ist die Einführung der Urethangruppen durch Umsetzung der carboxyl- und hydroxylfunktionellen Polyester mit Mono-, Di-, Tri- oder höherfunktionellen Polyisocyanaten.

Ebenfalls möglich ist es, die Urethangruppen bei der Synthese der Polyester selbst einzuführen. Dies geschieht, indem Di- oder Tricarbonsäuren ganz oder teilweise gegen Di- oder Triisocyanate ausgetauscht werden.

Die Carboxylgruppen der carboxylfunktionellen (Meth)acrylcopolymerisate und Polyester der Komponente A) können mit einem Lacton "kettenverlängert" sein. Gleiches gilt für in den (Meth)acrylcopolymerisaten und Polyestern der Komponente A) gegebenenfalls enthaltene Hydroxylgruppen. Die "Kettenverlängerung" ergibt sich durch unter Ringöffnung verlaufende Anlagerung von Lactonen an die Carboxyl- und/oder Hydroxylgruppen. Dabei entstehen endständige, exponierte Carboxyl- bzw. Hydroxylgruppen. Bevorzugt erfolgt die Anlagerung von Lactonen an carboxylfunktionelle (Meth)acrylcopolymerisate und Polyester der Komponente A), die frei von OH-Gruppen sind. Die Anlagerung des Lactons erfolgt bevorzugt als letzter Syntheseschritt bei der Herstellung der betreffenden Komponente A). Ein Beispiel für ein besonders bevorzugt eingesetztes Lacton ist epsilon-Caprolacton.

Die erfindungsgemäßen härtbaren Überzugsmittel enthalten als Komponente B) einen oder mehrere epoxidfunktionelle Vernetzer. Ein Teil der oder die gesamte Menge der in den erfindungsgemäßen Überzugsmitteln enthaltenen epoxidfunktionellen Vernetzer B) dient als Reaktionsmedium bei der Herstellung der in der Folge noch erläuterten Harnstoffverbindungen D).

Bei den epoxidfunktionellen Vernetzern B) handelt es sich beispielsweise um Verbindungen mit mindestens zwei Epoxidfunktionen im Molekül und einem Epoxidäquivalentgewicht von beispielsweise 200 bis 700, bevorzugt 250 bis 500 und insbesondere 300 bis 400, jeweils bezogen auf Festharz. Das Zahlenmittel des Molgewichtes (Mn) liegt bevorzugt bei 200 bis 10000 g/mol. Die Glasübergangstemperatur liegt bevorzugt bei -20°C bis 70°C, besonders bevorzugt bei 0°C bis 50°C und insbesondere bei 5°C bis 40°C. Bevorzugt liegt die Obergrenze bei bis zu 50°C.
Beispiele hierfür sind übliche Di- oder Polyepoxide, z.B. Polyglycidylether auf Basis von Diethylenglykol, Dipropylenglykol, Polypropylenglykol, Bisphenol A oder Triglycidylether von Glycerin.

Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthal- oder Terephthalsäure zu Phthal- oder Terephthalsäurebis(2,3-epoxypropylester) oder einem Diglycidylether von Bisphenol A mit Trimellithsäureanhydrid zu Polyestern, beispielsweise mit einem Zahlenmittel des Molekulargewichtes (Mn) von 500 bis 2000.

Bevorzugte Komponenten B) sind epoxidfunktionelle (Meth)acrylcopolymere, insbesondere Glycidyl(meth)acrylat-Copolymere. Als Comonomere können beispielsweise (Meth)acrylsäureester, wie z.B. Methyl-, Ethyl-, Butyl-, Isoburyl-, Ethylhexyl-, Cyclohexyl- und/oder Lauryl(meth)acrylat gewählt werden, (Meth)acrylsäurehydroxyalkylester wie z.B. Hydroxyethyl- und/oder Hydroxypropyl(meth)acrylat, weiterhin auch Styrol, Vinyltoluol und/oder alpha-Methylstyrol sowie alle alpha, beta-ungesättigten Monomere, wie sie bereits vorstehend bei der Komponente A) beschrieben wurden. Das Zahlenmittel des Molgewichtes (Mn) kann beispielsweise zwischen 1000 und 10000 liegen, bevorzugt bei 2000 bis 5000. Weitere copolymerisierbare glycidylfunktionelle Monomere sind z.B. (Meth)allylglycidylether oder 3,4-Epoxy-1-vinylcyclohexan. Die Herstellung der Copolymeren erfolgt über radikalische Lösungspolymerisation, sie ist dem Fachmann bekannt und wird nach üblichen Methoden durchgeführt.

Bei der Bereitung der erfindungsgemäßen Überzugsmittel werden die Mengenverhältnisse bevorzugt so gewählt, daß zwischen der carboxylgruppenhaltigen Komponente A) und der Epoxidkomponente B) ein molares Verhältnis der Carboxylzu Epoxidgruppen von 1:3 bis 3:1 vorliegt.

Die erfindungsgemäßen Überzugsmittel können als Bestandteil ihres Bindemittel/Vernetzersystems 0 bis 30 Gew.-% eines oder mehrerer Polymerpolyole C), bezogen auf die Summe der Gewichte der Komponenten A) und B), jeweils bezogen auf den Feststoffgehalt, enthalten.

Bei den gegebenenfalls in den erfindungsgemäßen Überzugsmitteln enthaltenen Polymerpolyolen C) handelt es sich um aus hydroxylfunktionellen Polyestern, Polyurethanen und/oder (Meth)acrylcopolymeren ausgewählte Polymerpolyole, die verschieden sind von solchen Komponenten A) bzw. B), die neben den Carboxylgruppen bzw. Epoxidgruppen gegebenenfalls zusätzlich Hydroxylgruppen enthalten können. Die Polymerpolyole C) besitzen mindestens zwei Hydroxylfunktionen im Molekül. Neben den Hydroxylgruppen entsprechend einer Hydroxylzahl von beispielsweise 30 bis 350 mg KOH/g können die Polymerpolyole C) auch Carboxylgruppen entsprechend einer Säurezahl von 0 bis unter 20 mg KOH/g enthalten. Die Polymerpolyole C) enthalten neben den Hydroxylgruppen und den gegebenenfalls vorhandenen Carboxylgruppen bevorzugt keine weiteren funktionellen Gruppen, insbesondere keine Epoxidgruppen.

Die in den erfindungsgemäßen Überzugsmitteln gegebenenfalls eingesetzten Polymerpolyole C) sind beispielsweise solche mit einem Zahlenmittel der Molmasse (Mn) von 500 bis 10000 und Hydroxylzahlen von 30 bis 350, bevorzugt von 50 bis 280 mg KOH/g.

Beispiele für in den erfindungsgemäßen Überzugsmitteln als Polymerpolyole C) einsetzbare hydroxyfunktionelle Polyesterharze oder hydroxylfunktionelle Polyurethanharze sind übliche, beispielsweise solche mit einem Zahlenmittel der Molmasse (Mn) von 500 bis 5000, bevorzugt von 1000 bis 3000 und Hydroxylzahlen von 30 bis 350, bevorzugt von 50 bis 280 mg KOH/g.

Beispiele für in den erfindungsgemäßen Überzugsmitteln als Polymerpolyole C) einsetzbare hydroxylfunktionelle (Meth)acrylcopolymere sind übliche, beispielsweise solche mit einem Zahlenmittel der Molmasse (Mn) zwischen 1000 und 10000 und Hydroxylzahlen von 30 bis 300, bevorzugt von 50 bis 250 mg KOH/g. Die (Meth)acryl-Copolymeren können beispielsweise in Gegenwart von oligomeren oder polymeren Polyester- und/oder Polyurethanharzen, beispielsweise solchen wie in den beiden vorstehenden Absätzen erläutert, hergestellt worden sein.

Neben den Komponenten A) und B) und gegebenenfalls C) können die erfindungsgemäßen Überzugsmittel auch ein oder mehrere weitere von A), B) und C) unterschiedliche Zusatzvernetzer E) als Bestandteil ihres Bindemittel/Vernetzersystems enthalten, die eine Zusatzvernetzung unter Einbezug von Hydroxylgruppen. beispielsweise der im Bindemittelsystem gegebenenfalls vorhandenen und/oder während des Einbrennens im Zuge der Epoxid/Carboxyl-Additionsreaktion gebildeten Hydroxylgruppen, ermöglichen. Die Zusatzvernetzer sind in Mengenanteilen von insgesamt 0 bis 20 Gew.-%, bezogen auf die Summe der Komponenten A) und B) und gegebenenfalls C) enthalten, jeweils bezogen auf den Feststoffgehalt.

Beispiele für Zusatzvernetzer E) sind Aminoplastharze, insbesondere Melaminharze. Beispiele hierfür sind butanol- oder isobutanolveretherte Melaminharze wie z.B. die Handelsprodukte Setamin ^{R} US 138 oder Maprenal ^{R} MF 610; sowohl butanol- als auch methanolveretherte Melaminharze wie z.B. Cymel ^{R} 254, methanolveretherte Melaminharze wie z.B. Cymel ^{R} 325, Cymel ^{R} 327. Cymel ^{R} 350 und Cymel ^{R} 370. Maprenal ^{R} MF 927 oder Melaminharze vom Hexamethoxymethylmelamin-Typ wie z.B. Cymel ^{R} 301 oder Cymel ^{R} 303.

Weitere Beispiele für Zusatzvernetzer E) sind unter Estergruppenbildung, insbesondere unter Bildung von Urethangruppen (Carbaminsäureestergruppen) vernetzende Komponenten auf Triazinbasis, wie beispielsweise bevorzugt Tris(alkoxycarbonylamino)triazin.

Weitere Beispiele für Zusatzvernetzer E) sind blockierte Polyisocyanate, die aus freien Polyisocyanaten durch Umsetzung mit unter den Einbrennbedingungen wieder abspaltbaren ein aktives Wasserstoffatom enthaltenden Verbindungen hergestellt werden können. Beispiele für einsetzbare Polyisocyanate sind insbesondere cycloaliphatische und aliphatische Polyisocyanate wie Tetramethylendiisocyanat, Hexamethylendiisocyanat, 2,2,4-Trimethylendiisocyanat, Cyclohexan-1,3- und 1,4-diisocyanat, Isophorondiisocyanat, Biscyclohexylmethandiisocyanat.

Neben diesen einfachen Isocyanaten sind auch solche geeignet, die Heteroatome im die Isocyanatgruppen verknüpfenden Rest enthalten. Beispiele hierfür sind Carbodiimidgruppen, Allophanatgruppen, Isocyanuratgruppen, Uretdiongruppen, Urethangruppen, acylierte Harnstoffgruppen und/oder Biuretgruppen aufweisende Polyisocyanate.

Besonders gut geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-isocyanatohexyl)-biuret, das sich von Isophorondiisocyanat oder Hexandiisocyanat ableitende Isocyanurat oder niedermolekulare, Urethangruppen aufweisende Polyisocyanate, wie sie durch Umsetzung von im Überschuß eingesetztem Isophorondiisocyanat mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate eingesetzt werden.

Geeignete Polyisocyanate sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. In diesen bekannten Prepolymeren entspricht das Verhältnis von Isocyanatgruppen zu gegenüber Isocyanatgruppen reaktiven Wasserstoffatomen bevorzugt 1,05 bis 10:1, besonders bevorzugt 1,1 bis 3:1, wobei die Wasserstoffatome vorzugsweise aus Hydroxylgruppen stammen. Die Art und Mengenverhältnisse der bei der Herstellung von Isocyanatgruppen aufweisenden Prepolymeren eingesetzten Ausgangsmaterialien werden im übrigen vorzugsweise so gewählt, daß die Isocyanatgruppen aufweisenden Prepolymeren eine mittlere NCO-Funktionalität von 2 bis 4, vorzugsweise von 2 bis 3 und ein Zahlenmittel der Molmasse (Mn) von 500 bis 10000, vorzugsweise von 800 - 4000 aufweisen.

Als Verkappungsmittel werden Verbindungen mit einem aktiven Wasserstoffatom eingesetzt, beispielsweise ausgewählt aus CH-aciden Verbindungen wie Acetylaceton oder CH-acide Ester, wie z.B. Acetessigsäurealkylester, Malonsäuredialkylester, aliphatische oder cycloaliphatische Alkohole, wie n-Butanol, Isopropanol, tert.-Butanol, Furfurol, 2-Ethylhexanol, Cyclohexanol; Oxime wie Methylethylketoxim, Acetonoxim, Cyclohexanonoxim, Acetophenonoxim, Lactame wie epsilon-Caprolactam oder Pyrrolidon-2, Imidazole wie 2-Methylimidazol, Pyrazole wie 2,3-Dimethylpyrazol.

Weitere Beispiele für Zusatzvernetzer E), die in den erfindungsgemäßen Überzugsmitteln enthalten sein können, sind organische Verbindungen, die mindestens zwei cyclische Carbonsäureanhydridgruppen pro Molekül aufweisen. Der Gehalt dieser Verbindungen an Carbonsäureanhydridgruppen (formal berechnet als C₄O₃, Molekulargewicht = 96) liegt bevorzugt bei 5 bis 88 Gew.-%, besonders bevorzugt 6 bis 30 Gew.-%. Geeignet sind beispielsweise Trimellithsäureanhydrid-Ester von Ethylenglykol, Propylenglykol, Diethylenglykol, Triethylenglykol, Neopentylalykol, Glycerin oder Trimethylolpropan, bevorzugt hergestellt im Verhältnis 1 mol Trimellithsäureanhydrid pro mol Hydroxylgruppen.

Weitere geeignete Polyanhydride sind beispielsweise Benzophenon-tetracarbonsäuredianhydrid und 1,2,4,5-Benzol-tetracarbonsäure-dianhydrid.

Besonders bevorzugte Polyanhydride sind Copolymerisate von olefinisch ungesättigten Monomeren, die pro Molekül im statistischen Mittel mindestens zwei cyclische Carbonsäureanhydridgruppen aufweisen. Bevorzugt handelt es sich hierbei um Copolymerisate von Maleinsäureanhydrid und/oder Itaconsäureanhydrid mit üblichen Comonomeren wie sie beispielsweise im Zusammenhang mit der Komponente A) beispielhaft schrieben sind. Besonders gut geeignet sind Copolymerisate, basierend auf Maleinsäureanhydrid, Styrol und/oder Alkylestern der Acryl- und/oder Methacrylsäure. Die Copolymerisate weisen vorzugsweise ein Zahlenmittel des Molgewichts (Mn) von 1500 bis 75000, besonders bevorzugt 2000 bis 50000 auf.

Weiterhin können die erfindungsgemäßen Überzugsmittel als Bestandteil ihres Bindemittel/Vernetzersystems 0 bis 10 Gew.-% Monoepoxidverbindungen F), bezogen auf die Summe der Komponenten A) und B) enthalten, jeweils bezogen auf den Festkörper. Dabei handelt es sich um unter den Einbrennbedingungen im wesentlichen nichtflüchtige Substanzen, beispielsweise beträgt der flüchtige Anteil bevorzugt unter 1 Gew.-%, bezogen auf die Gesamtmenge an Monoepoxid F). Die berechneten Molmassen der Monoepoxide F) liegen über 150 und bevorzugt sind derartige Verbindungen mit einem zahlenmittleren Molekulargewicht (Mn) von bis zu 3000, besonders bevorzugt unter 1000. Im Falle der niedrigen Molekulargewichte können diese Verbindungen das Viskositätsverhalten der hiermit erstellten Lacke positiv beeinflussen, da sie bei Addition an Carboxylgruppen der Komponente A) quasi als Reaktivverdünner fungieren.

Beispiele für derartige Verbindungen sind z.B. Umsetzungsprodukte aus einer Diglycidylverbindung, z.B. eines Diglycidylethers, wie einem Mol Bisphenol-Adiglycidylether und einem Mol einer gesättigten oder ungesättigten Monocarbonsäure wie Essigsäure. Propionsäure oder Isononansäure Weitere Beispiele sind Umsetzungsprodukte von Di- oder Polyepoxiden wie z.B Polyglycidylether auf der Basis von Diethylenglykol, Dipropylenglykol, Polypropylenglykol mit einem Zahlenmittel des Molgewichts von bis zu 2000 und Triglycidylether von Glycerin und/oder Polyphenolen wie Bisphenol A oder F mit den genannten Monocarbonsäuren.

Besonders bevorzugt ist der Glycidylester der Versaticsäure mit dem Handelsproduktnamen Cardura E der Shell AG.

Die erfindungsgemäßen Überzugsmittel weisen im applikationsfähigen Zustand einen Festkörpergehalt, gebildet aus dem Harzfestkörper des Bindemittel/Vernetzersystems, den nachstehend erläuterten Harnstoffverbindungen D) sowie gegebenenfalls enthaltenen weiteren nichtflüchtigen Bestandteilen, von 40 bis 70 Gew.-% auf. Als flüchtige Bestandteile enthalten sie organische Lösemittel, wie sie beispielsweise für die Herstellung von Überzugsmitteln, beispielsweise Lacken üblich sind. Es kann sich auch um Lösemittel handeln, wie sie bei der Herstellung der Einzelkomponenten verwendet werden. Beispiele sind Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe.

Die erfindungsgemäßen Überzugsmittel enthalten 0,1 bis 3, bevorzugt 0,3 bis 2, besonders bevorzugt 0,5 bis 1,5 Gew.-%, bezogen auf den Harzfestkörper der Überzugsmittel, einer oder mehrerer zuvor in Gegenwart zumindest eines Teils des oder der epoxidfunktionellen Vernetzer B) hergestellter, im Überzugsmittel unlöslicher, fester Harnstoffverbindungen D) als Antiablaufmittel. d.h. als thixotropierend wirkende oder Strukturviskosität bewirkende Mittel, welche das Ablaufverhalten der erfindungsgemäßen Überzugsmittel günstig beeinflußen. Sie verhindern das unerwünschte Ablaufen oder Absacken von aus den erfindungsgemäßen Überzugsmitteln auf senkrechten Flächen aufgebrachten Überzugsschichten wirksam.

Bei den Harnstoffverbindungen D) handelt es sich um übliche Antiablaufmittel, wie beispielsweise aus den DE-C-27 51 761, EP-A-0 192 304 und EP-A-0 198 519 bekannte Harnstoffverbindungen.

Bei den Harnstoffverbindungen D) handelt es sich um Additionsprodukte aus aromatischen, araliphatischen, cycloaliphatischen oder aliphatischen Diisocyanaten und/oder davon abgeleiteten Polyisocyanaten (beispielsweise solche vom Isocyanurat-Typ) und Mono- und/oder Polyaminen mit primären und/oder sekundären Aminogruppen. Bei den Additionsprodukten kann es sich um definierte niedermolekulare Verbindungen oder oligomere oder polymere Additionsprodukte handeln. Bevorzugte Harnstoffverbindungen D) sind solche, bei denen Polyisocyanat und Amin in einem stöchiometrischen Verhältnis von 0,7 bis 1,5 primären und/oder sekundären Aminogruppen pro Isocyanatgruppe umgesetzt worden sind, besonders bevorzugt in einem stöchiometrischen Verhältnis von Aminogruppen zu Isocyanatgruppen von 0,9 bis 1,1 : 1. Besonders bevorzugt werden als Harnstoffverbindungen D) Additionsprodukte aus Diisocyanaten, bevorzugt aus aliphatischen oder cycloaliphatischen Diisocyanaten und primären Aminen, bevorzugt primären Monoaminen eingesetzt. Bevorzugt handelt es sich bei den aliphatischen oder cycloaliphatischen Diisocyanaten um symmetrisch aufgebaute Diisocyanate.

Die in den erfindungsgemäßen Überzugsmitteln eingesetzten Harnstoffverbindungen D) werden so ausgewählt, daß es sich um feste, besonders bevorzugt kristalline Stoffe handelt. Die Teilchengrößen der D)-Teilchen liegen bevorzugt bei 0,1 bis 20 µm. Bevorzugt besitzen die festen oder kristallinen Harnstoffverbindungen D) einen hohen Erstarrungs- oder Schmelzpunkt, der insbesondere oberhalb der beim Einbrennen der erfindungsgemäßen Überzugsmittel herrschenden Einbrenntemperaturen liegt. insbesondere über 80°C, beispielsweise zwischen 80 und 250°C. Besonders bevorzugt wird das aus 1,6-Hexandiisocyanat und Benzylamin im molaren Verhältnis 1 : 2 gebildete Addukt als Harnstoffverbindung D) in den erfindungsgemäßen Überzugsmitteln eingesetzt.

Die Harnstoffverbindungen D) können in üblicher Weise hergestellt werden durch Addition von Aminen mit primären und/oder sekundären Aminogruppen an Polyisocyanate. Dabei kann Amin zum Polyisocyanat oder Polyisocyanat zum Amin zugegeben werden, oder die Reaktanden werden simultan zugegeben, bevorzugt ist die Zugabe des Amins zum Polyisocyanat. Die Herstellung erfolgt beispielsweise bei Temperaturen zwischen 20 und 80°C in Gegenwart zumindest eines Teils des oder der im erfindungsgemäßen Überzugsmittel enthaltenen epoxidfunktionellen Vernetzer B), d.h. in Gegenwart eines Teils der oder der gesamten im erfindungsgemäßen Überzugsmittel vorhandenen epoxidfunktionellen Vernetzer B). Enthält das erfindungsgemäße Überzugsmittel mehr als einen epoxidfunktionellen Vernetzer B). kann die Herstellung beispielsweise in einem dieser epoxidfunktionellen Vernetzer B) erfolgen. Zweckmäßig ist es bei der Herstellung der Harnstoffverbindungen D) eine gute Durchmischung des Reaktionssystems, beispielsweise durch kräftiges Rühren, durch Verwendung eines Dissolvers oder durch Durchführung der Additionsreaktion in bzw. unter Verwendung eines Rotor-Stator-Aggregats zu gewährleisten. Bevorzugt wird so gearbeitet, daß die gebildeten Harnstoffverbindungen D) in der epoxidfunktionellen Vernetzerkomponente B) bzw. deren organischer Lösung (beispielsweise in einem der vorstehend genannten Lösemittel für die Überzugsmittel) als feinverteilter Feststoff ausfallen oder auskristallisieren, beispielsweise während oder nach Beendigung der Additionsreaktion, beispielsweise beim oder nach dem Abkühlen.

Es kann zweckmäßig sein, wenn bei der in Gegenwart von epoxidfunktioneller Vernetzerkomponente B) als solcher oder in deren organischer Lösung ablaufenden Herstellung der Harnstoffverbindungen D) aus Amin- und Polyisocyanatverbindungen Säure im Reaktionssystem vorhanden ist. Der Gehalt an Säure im Reaktionsmedium liegt dann beispielsweise zwischen 0 und unter 20 mg KOH/g, bezogen auf den Harzfestkörper im Reaktionsmedium. Als Säuren zur Einstellung einer Säurezahl im angegebenen Wertebereich können anorganische oder organische Säuren, bevorzugt Carbonsäuren eingesetzt werden. Bevorzugt ist es, carboxylfunktionelles Bindemittel der Komponente A) zur Einstellung der Säurezahl im Reaktionsmedium zu verwenden. Das Reaktionsmedium enthält dann epoxidfunktionelle Komponente(n) B), eine zur Einstellung seiner Säurezahl im vorstehend genannten Bereich entsprechende Menge an carboxylfunktionelle(n) Komponente(n) A) sowie gegebenenfalls organische Lösemittel.

Der Gehalt der Harnstoffverbindungen D) in den Dispersionen aus D), B) und gegebenenfalls Lösemittel beträgt in der Regel zwischen 0.5 und 10 Gew.-%, beispielsweise zwischen 1 und 10 Gew. %, bezogen auf den Feststoffgehalt an epoxidfunktioneller Vernetzerkomponente B).

Die Herstellung der erfindungsgemäßen Überzugsmittel erfolgt bevorzugt so, daß die Dispersion der Harnstoffverbindungen D) in der flüssigen oder organisch gelösten epoxidfunktionellen Vernetzerkomponente B) mit den übrigen Bestandteilen des Überzugsmittels vermischt wird. Beispielsweise wird zunächst mit der Komponente A) und dem gegebenenfalls noch fehlenden Anteil an Komponente B) vermischt, bevor die weiteren Bestandteile hinzugemischt werden.

Im übrigen können für die erfindungsgemäßen Überzugsmittel beispielsweise die in den DE-C-27 51 761, EP-A-0 192 304 und EP-A-0 198 519 beschriebenen Harnstoffverbindungen D), Ausgangsstoffe, Verfahren und Verfahrensparameter zu ihrer Herstellung und ihrer Einarbeitung in Überzugsmittel verwendet werden.

Sollen die erfindungsgemäßen Überzugsmittel als pigmentierte Decklacke beispielsweise bei der Herstellung der äußeren Deckschicht einer Mehrschichtlackierung eingesetzt werden, so enthalten sie Pigmente und gegebenenfalls Füllstoffe. Dabei liegt das Pigment/Harzfestkörper-Gewichtsverhältnis beispielsweise im Bereich zwischen 0,05 bis 2 : 1. Beispiele für Pigmente sind anorganische und/oder organische Buntpigmente und/oder Effektpigmente, wie z.B. Titandioxid, Eisenoxidpigmente, Ruß, Azopigmente, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferpthalocyaninpigmente. Beispiele für Füllstoffe sind lackübliche Füllstoffe, wie z.B. Talkum und Silikate.

Weiterhin können die als pigmentierte Decklacke oder bevorzugt als transparente Klarlacke einsetzbaren erfindungsgemäßen Überzugsmittel lackübliche Additive in lacküblichen Mengen, beispielsweise bis zu 5 Gew.-% bezogen auf den gesamten Lack, enthalten, z.B. transparente Pigmente oder Füllstoffe, Verlaufsmittel, Farbstoffe, Lichtschutzmittel, Antioxidantien oder weitere, neben den Harnstoffverbindungen D) verwendbare Rheologiesteuerer, wie Mikrogele, NAD (= non-aqueous-dispersions), spätestens während des Einbrennens Formaldehyd liefernde Verbindungen, Katalysatoren zur Katalyse der Reaktion von Carboxyl- und Epoxidgruppen und/oder zur Katalyse der gegebenenfalls möglichen Zusatzvernetzung.

Die erfindungsgemäßen Überzugsmittel können nach bekannten Verfahren, insbesondere durch Spritzen in Schichtdicken beispielsweise von 25 bis 60 µm appliziert werden. Nach einer Abdunstphase kann das applizierte Überzugsmittel durch Erwärmen vernetzt werden. Die Einbrenntemperaturen liegen z.B. bei 60 bis 180°C, bevorzugt bei 60 bis 160°C.

Die erfindungsgemäßen Überzugsmittel können zur Herstellung der äußeren pigmentierten Decklackschicht einer Mehrschichtlackierung verwendet werden. Insofern betrifft die vorliegende Erfindung auch die Verwendung der erfindungsgemäßen Überzugsmittel als Decklacküberzugsmittel.

Bevorzugt werden die erfindungsgemäßen Überzugsmittel als transparente Klariacke formuliert. die zur Herstellung der äußeren Klarlackschicht einer Mehrschichtlackierung verwendet werden können. Insofern betrifft die vorliegende Erfindung auch die Verwendung der erfindungsgemäßen Überzugsmittel als Klarlacküberzugsmittel. Beispielsweise kann das erfindungsgemäße Klarlacküberzugsmittel auf ein mit einer farb- und/oder effektgebenden ein- oder mehrschichtigen Vorbeschichtung versehenes Substrat aufgetragen und eingebrannt werden. Die Einbrenntemperaturen der erfindungsgemäßen Klarlacküberzugsmittel liegen beispielsweise zwischen 60 und 160°C. Für Automobilanwendungen liegen sie beispielsweise zwischen 60 und 140, für Anwendungen in der Automobilserienlackierung insbesondere zwischen 80 und 140 und bevorzugt zwischen 110 und 130°C.

Bevorzugt werden die erfindungsgemäßen Klarlacküberzugsmittel zur Herstellung einer Basislack/Klarlack-Mehrschichtlackierung verwendet. Dabei erfolgt der Auftrag einer farb- und/oder effektgebenden Basislackschicht auf ein gegebenenfalls vorbeschichtetes Substrat, insbesondere auf vorbeschichtete Automobilkarossen oder deren Teile, bevor die Klarlacküberzugsschicht aus einem erfindungsgemäßen Klarlacküberzugsmittel aufgetragen und eingebrannt wird. Beispiele für Vorbeschichtungen auf Automobilkarossen oder deren Teilen sind eine Elektrotauchgrundierungsschicht, eine zweischichtige Vorbeschichtung bestehend aus einer Elektrotauchgrundierungsschicht und einer Spritzfüllerschicht oder eine zweischichtige Vorbeschichtung bestehend aus einer Elektrotauchgrundierungsschicht und einer zweiten elektrophoretisch aufgebrachten Überzugsschicht.

Die farb- und/oder effektgebende Basislackschicht kann vor Auftrag der Klarlackschicht aus dem erfindungsgemäßen Klarlacküberzugsmittel eingebrannt werden. bevorzugt jedoch wird das erfindungsgemäße Klarlacküberzugsmittel nach dem bekannten Naß-in-Naß-Verfahren auf die den Farbton der Mehrschichtlackierung bestimmende Basislackschicht aufgetragen. Dabei erfolgt der Auftrag der Basislackschicht durch Spritzen aus einem farb- und/oder effektgebenden wäßrigen oder lösemittelbasierenden Basislack in einer vom Farbton abhängigen Trockenschichtdicke, beispielsweise zwischen 10 bis 25 µm. Im Anschluß an die Applikation der Basislackschicht erfolgt nach einer kurzen Ablüftphase, z.B. bei 20 bis 80°C, der Auftrag der Klarlackschicht aus dem erfindungsgemäßen Klarlacküberzugsmittel durch Spritzen in einer Trockenschichtdicke von im allgemeinen zwischen 25 und 50 µm. Gegebenfalls kann kurz abgelüftet werden. Danach wird das Substrat dem Einbrennprozeß zugeführt, bei dem die Klarlacküberzugsschicht gemeinsam mit der Basislackschicht bei erhöhten Temperaturen beispielsweise von 60 bis 160°C eingebrannt wird.

Mit der vorliegenden Erfindung lassen sich Mehrschichtlackierungen, insbesondere Basislack/Klarlack-Zweischichtlackierungen, insbesondere auf Kraftfahrzeugen und deren Teilen mit hervorragendem optisch-ästhetischem Eindruck und guter Chemikalien- und Säurefestigkeit herstellen. Ein Ablaufen des Klarlacks an senkrechten Flächen während des Aushärtens, insbesondere des Einbrennens wird wirksam verhindert.

### Beispiel 1 (Herstellung eines carboxylfunktionellen Polyesters):

### a) Herstellung eines hydroxylfunktionellen Polyesteroligomeren:

1100 g Trimethylolpropan und 899 g Adipinsäure werden in Gegenwart von 2 g hypophosphoriger Säure bei 180°C bis 240°C in der Schmelze auf eine Säurezahl von 0,5 mg KOH/g verestert. Anschließend wird mit 770 g Butylacetat verdünnt.

Das Produkt hat einen Einbrennrückstand von 64.5% (1h 150°C) und eine Hydroxylzahl von 390 mg KOH/g, bezogen auf Feststoffgehalt.

### b) Carboxylfunktionalisierung des hydroxylfunktionellen Polyesteroligomeren:

878 g des Produktes aus Beispiel 1a), 622 g Hexahydrophthalsäureanhydrid und 277 g Butylacetat werden auf 80°C erhitzt. Nach Abklingen der exothermen Reaktion wird auf 140°C erhitzt und die Reaktion bis zum Erreichen der erwünschten Säurezahl durchgeführt. Anschließend werden 100 g epsilon-Caprolacton zugegeben. Die Umsetzung wird bei 140°C bis zum Erreichen des theoretischen Festkörpergehaltes durchgeführt.

Das carboxylfunktionelle Polyesterharz hat einen Einbrennrückstand von 67,7% (1h 150°C) und eine Säurezahl von 190 mg KOH/g, bezogen auf Feststoffgehalt.

### Herstellung von Harnstoffdispersionen in Gegenwart epoxidfunktioneller Methacrylcopolymerer:

### Beispiel 2

Bei Raumtemperatur werden 836 g einer 69gew.-%igen Lösung eines epoxidfunktionellen Methacrylcopolymeren (Monomerengewichtsverhältnis: 3 % tert.-Butylacrylat, 11% Butandiolmonoacrylat, 17% Styrol, 24% Ethylhexylmethacrylat, 45% Glycidylmethacrylat; zahlenmittleres Molekulargewicht (Mₙ) = 4000) in einem 9:1-Gemisch aus Solvesso 100 (Gemisch aromatischer Kohlenwasserstoffe mit Siedebereich 155 bis 185°C) und n-Butanol) vorgelegt und mit 6,8 g Hexamethylendiisocyanat versetzt. Nach Homogenisierung werden unter schnellem Rühren innerhalb 5 min 16,5 g einer 50gew.-% igen Lösung von Benzylamin in n-Butanol zudosiert. Anschließend werden 30 g n-Butanol zugegeben und 1 h bei Raumtemperatur nachgerührt. Man erhält eine durch Harnstoffkristalle milchig getrübte Harzlösung.

### Beispiel 3

Bei Raumtemperatur werden 492 g der 69gew.-%igen Lösung des epoxidfunktionellen Methacrylcopolymeren aus Beispiel 2, 9,6 g der Lösung des carboxylfunktionellen Polyesters aus Beispiel 1, 24 g n-Butanol und 42,6 g Solvesso 100 vorgelegt und mit 4 g Hexamethylendiisocyanat versetzt. Nach Homogenisierung werden unter schnellem Rühren innerhalb 5 min 9.9 g einer 50%gew.-igen Lösung von Benzylamin in n-Butanol zudosiert. Anschließend werden 18 g Solvesso 100 zugegeben und 1 h bei Raumtemperatur nachgerührt. Man erhält eine durch Harnstoffkristalle milchig getrübte Harzlösung.

### Beispiel 4

Bei Raumtemperatur werden 492 g der 69 gew.-% igen Lösung des epoxidfunktionellen Methacrylcopolymeren aus Beispiel 2, 9,6 g der Lösung des carboxylfunktionellen Polyesters aus Beispiel 1, 24 g n-Butanol und 42,6 g Solvesso 100 vorgelegt und mit 5 g Benzylamin versetzt. Nach Homogenisierung werden unter schnellem Rühren innerhalb 5 min 9 g einer frisch bereiteten Mischung von 4 g Hexamethylendiisocyanat und 5 g n-Butanol zudosiert. Anschließend werden 18 g Solvesso 100 zugegeben und 1 h bei Raumtemperatur nachgerührt. Man erhält eine durch Harnstoffkristalle milchig getrübte Harzlösung.

### Beispiel 5

Bei Raumtemperatur werden 479 g der 69gew.-%igen Lösung des epoxidfunktionellen Methacrylcopolymeren aus Beispiel 2, 9,6 g der Lösung des carboxylfunktionellen Polyesters aus Beispiel 1, 24 g n-Butanol und 46,5 g Solvesso 100 vorgelegt und mit 8,1 g Hexamethylendiisocyanat versetzt. Nach Homogenisierung werden unter schnellem Rühren innerhalb 5 min 19,8 g einer 50gew.-%igen Lösung von Benzylamin in n-Butanol zudosiert. Anschließend werden 13 g Solvesso 100 zugegeben und 1 h bei Raumtemperatur nachgerührt. Man erhält eine durch Harnstoffkristalle milchig getrübte Harzlösung.

### Beispiel 6

Bei Raumtemperatur werden 836 g einer 69 gew.- %igen Lösung eines epoxidfunktionellen Methacrylcopolymeren (Monomerenzusammensetzung; 3% tert.-Butylacrylat, 11% Butylacrylat, 17% Styrol, 24% Ethylhexylmethacrylat, 45% Glycidylmethacrylat; zahlenmittleres Molekulargewicht (Mₙ) = 3800) in einem 9:1-Gemisch aus Solvesso 100 und n-Butanol) vorgelegt und mit 6.8 g Hexamethylendiisocyanat versetzt. Nach Homogenisierung werden unter schnellem Rühren innerhalb 5 min 16.5 g einer 50% gew.-igen Lösung von Benzylamin in n-Butanol zudosiert. Anschließend werden 30 g n-Butanol zugegeben und 1 h bei Raumtemperatur nachgerührt. Man erhält eine durch Harnstoffkristalle milchig getrübte Harzlösung.

### Beispiel 7

Bei Raumtemperatur werden 492 g der 69gew.-%igen Lösung des epoxidfunktionellen Methacrylcopolymeren aus Beispiel 6, 9,6 g der Lösung des carboxylfunktionellen Polyesters aus Beispiel 1, 24 g n-Butanol und 42,6 g Solvesso 100 vorgelegt und mit 4 g Hexamethylendiisocyanat versetzt. Nach Homogenisierung werden unter schnellem Rühren innerhalb 5 min 9,9 g einer 50%gew.-igen Lösung von Benzylamin in n-Butanol zudosiert. Anschließend werden 18 g Solvesso 100 zugegeben und 1 h bei Raumtemperatur nachgerührt. Man erhält eine durch Harnstoffkristalle milchig getrübte Harzlösung.

### Beispiel 8a-k (Herstellung von Klarlacken und Herstellung von Mehrschichtlackierungen):

Es werden Klarlacke mit der in Tabelle 1 angegebenen Zusammensetzung hergestellt.

Auf mit einer Kataphoresegrundierung und Füllerschicht versehene Bleche wird jeweils ein schwarzer Basislack in einer Trockenschichtdicke von 16 µm aufgespritzt und 10 Minuten bei 80°C vorgetrocknet. Die Klarlacke 8a-k werden jeweils keilförmig mit einem Schichtdickegradienten von 10 bis 60 µm Trockenschichtdicke auf die hängenden Bleche aufgespritzt. Nach 5 Minuten Ablüften bei Raumtemperatur wird 20 Minuten bei 140°C (Objekttemperatur) eingebrannt. Die Bleche befinden sich bei allen Operationen in der senkrechten Position.

Es werden jeweils hochglänzende Mehrschichtlackierungen erhalten. Alle Mehrschichtlackierungen zeigen im Tropfentest mit 10%iger Schwefelsäure (20 min 60°C) keine sichtbare Filmveränderung (Quellung).
Tabelle 1 zeigt neben der Zusammensetzung der Klarlacke ihre jeweilige Ablaufgrenze.

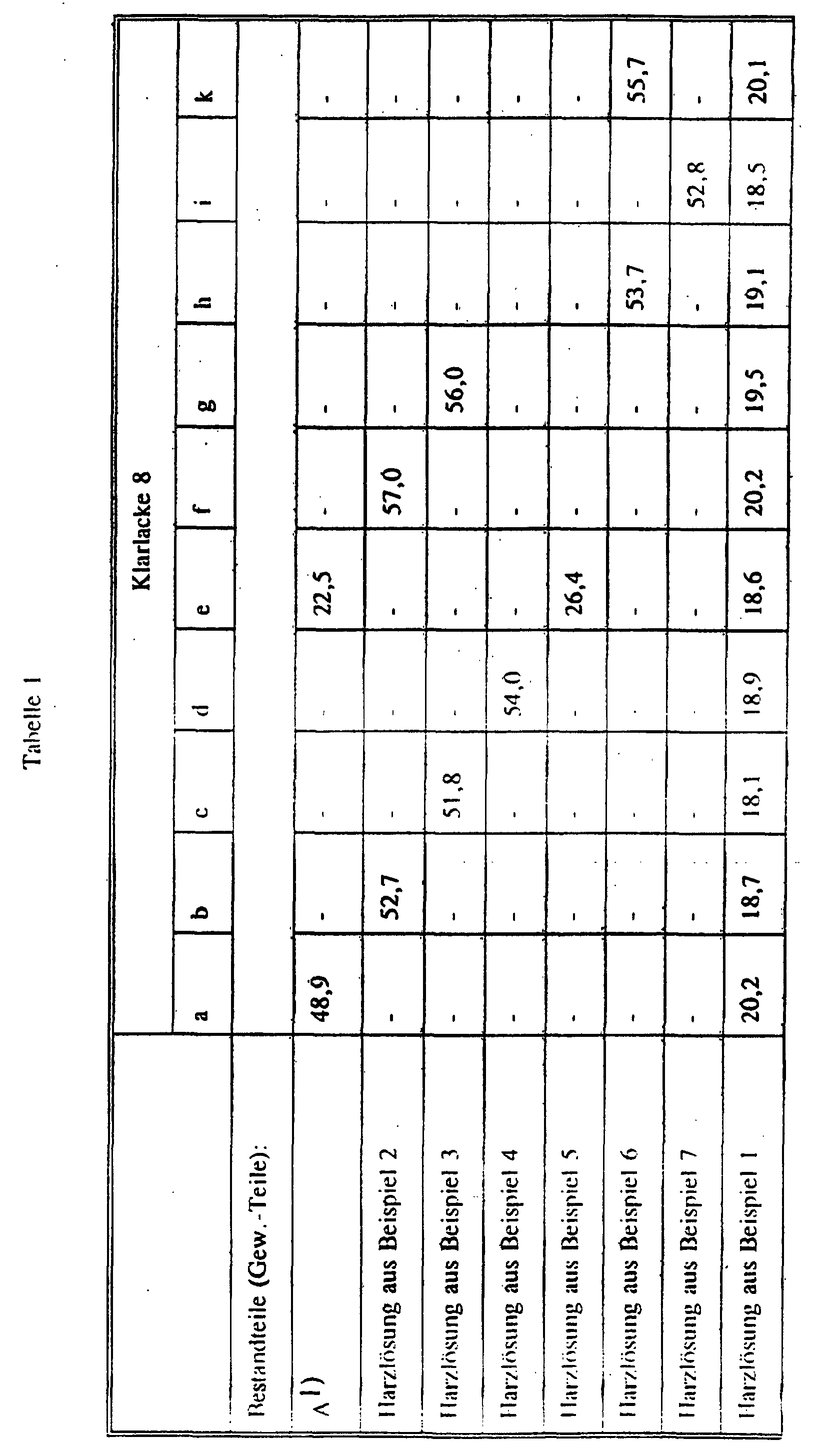

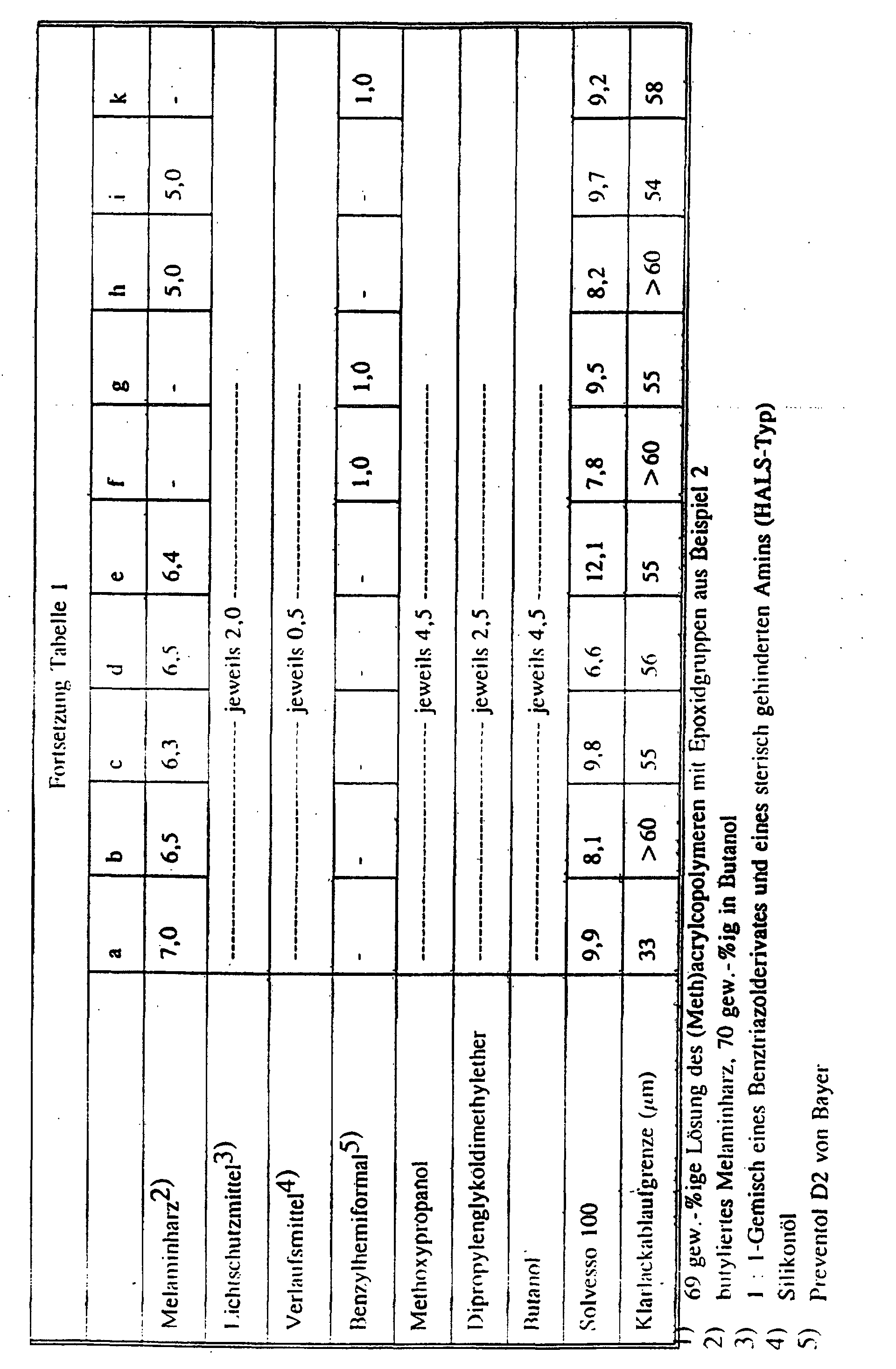

## Patentansprüche

1. Überzugsmittel, enthaltend ein Bindemittel/Vernetzer-System, ein oder mehrere organische Lösemittel, Antiablaufmittel, sowie gegebenenfalls Pigmente und/oder Füllstoffe und gegebenenfalls weitere lackübliche Additive, wobei das Bindemittel/Vernetzer-System enthält
20 bis 80 Gew.-% einer oder mehrerer carboxylfunktioneller Komponenten A) ausgewählt aus carboxylfunktionellen (Meth)acrylcopolymeren und/oder carboxylfunktionellen Polyestern, deren Carboxylfunktionalität jeweils einer Säurezahl von 20 bis 300 mg KOH/g entspricht, und
20 bis 80 Gew.-% eines oder mehrerer epoxidfunktioneller Vernetzer B), wobei sich die Gew.- % von A) und B) auf 100 Gew.-% addieren
0 bis 30 Gew.-% eines oder mehrerer Polymerpolyole C), bezogen auf die Summe der Gewichte der Komponenten A) und B),
0 bis 20 Gew.-% eines oder mehrerer von A), B) und C) unterschiedlicher weiterer Vernetzer E), bezogen auf die Summe der Gewichte von A), B) und C),
0 bis 10 Gew.-% eines oder mehrerer Monoepoxide F), bezogen auf die Summe der Gewichte von A) und B), sowie
0,1 bis 3 Gew.-%, bezogen auf den Harzfestkörper, einer oder mehrerer zuvor in Gegenwart zumindest eines Teils des oder der epoxidfunktionellen Vernetzer B) bereiteter, im Überzugsmittel unlöslicher, fester feinteiliger Harnstoffverbindungen D) als Antiablaufmittel,
wobei sich sämtliche Gew.-%-Angaben jeweils auf den Festkörper beziehen.

2. Überzugsmittel nach Anspruch 1, **dadurch gekennzeichnet, daß** die Bereitung der feinteiligen Harnstoffverbindungen D) durch Umsetzung von Amin- und Isocyanatverbindungen, in Gegenwart zumindest eines Teils der epoxidfunktionellen Vernetzer B) und gegebenenfalls von organischem Lösemittel durchgeführt wird.

3. Überzugsmittel nach einem der Ansprüche 1 oder 2, **dadurch gekennzeichnet, daß** die Harnstoffverbindungen D) in einer solchen Menge in der Komponente B) und gegebenenfalls Lösemittel bereitet werden, daß der Gehalt der Harnstoffverbindungen D) in den entstehenden Dispersionen 0.5 bis 10 Gew.-%, bezogen auf den Festkörpergehalt an epoxidfunktioneller Vernetzerkomponente B), beträgt.

4. Überzugsmittel nach einem der Ansprüche 1 bis 3, **dadurch gekennzeichnet, daß** die festen Harnstoffverbindungen D) Teilchengrößen von 0,1 bis 20 µm aufweisen.

5. Verfahren zur Herstellung von Mehrschichtüberzügen, **dadurch gekennzeichnet, daß** zur Herstellung einer Decklackschicht ein Überzugsmittel gemäß einem der Ansprüche 1 bis 4 eingesetzt wird.

6. Verfahren nach Anspruch 5, **dadurch gekennzeichnet, daß** als Decklackschicht eine Klarlackschicht hergestellt wird.

7. Verwendung der Überzugsmittel nach einem der Ansprüche 1 bis 4 zur Herstellung von Mehrschichtlackierungen von Kraftfahrzeugen.

8. Verwendung der Überzugsmittel nach Anspruch 7 zur Herstellung von Klarlackschichten.

## Claims

1. Coating composition containing a binder/crosslinker system, one or more organic solvents, anti-runoff agents and, optionally, pigments and/or fillers and, optionally, further additives conventionally employed in lacquers, wherein the binder/crosslinker system contains
from 20 to 80 wt.% of one or more carboxyl-functional components A) selected from carboxyl-functional (meth)acrylic copolymers and/or carboxyl-functional polyesters, the carboxyl functionality of which corresponds in each case to an acid number of from 20 to 300 mg KOH/g, and
from 20 to 80 wt.% of one or more epoxy-functional crosslinkers B), the sum of the wt.% of A) and B) being 100 wt.%,
from 0 to 30 wt.% of one or more polymer polyols C), based on the sum of the weights of components A) and B),
from 0 to 20 wt.% of one or more further crosslinkers E) other than A), B) and C), based on the sum of the weights of A), B) and C),
from 0 to 10 wt.% of one or more monoepoxides F), based on the sum of the weights of A) and B), and
from 0.1 to 3 wt.%, based on the resin solids, of one or more solid, finely divided urea compounds D) that have been prepared previously in the presence of at least a portion of the expoxy-functional crosslinker(s) B) and that are insoluble in the coating composition, as anti-runoff agents,
wherein all wt.% are in each case based on the solids.

2. Coating composition according to claim 1, **characterised in that** the preparation of the finely divided urea compounds D) is carried out by reaction of amine compounds and isocyanate compounds in the presence of at least a portion of the epoxy-function crosslinkers B) and, optionally, of organic solvent.

3. Coating composition according to any one of claims 1 or 2, **characterised in that** the urea compounds D) are prepared in component B) and, optionally, solvent in such an amount that the content of urea compounds D) in the resulting dispersions is from 0.5 to 10 wt.%, based on the solids content of epoxy-functional crosslinker component B).

4. Coating composition according to any one of claims 1 to 3, **characterised in that** the solid urea compounds D) have particle sizes from 0.1 to 20 µm.

5. Method of producing multi-layer coatings, **characterised in that** a coating composition according to any one of claims 1 to 4 is used to produce a finishing lacquer layer.

6. Method according to claim 5, **characterised in that** a clear lacquer layer is produced as the finishing lacquer layer.

7. Use of the coating compositions according to any one of claims 1 to 4 in the production of multi-layer lacquer coatings on motor vehicles.

8. Use of the coating compositions according to claim 7 in the production of clear lacquer layers.

## Revendications

1. Agent de revêtement contenant un système liant/agent de réticulation, un ou plusieurs solvants organiques, des agents anticoulure, et éventuellement des pigments et/ou des charges et éventuellement d'autres additifs usuels dans les peintures et vernis, où le système liant/agent de réticulation contient :
de 20 à 80 % en poids d'un ou plusieurs composants A) à fonctionnalité carboxyle choisis parmi les copolymères (méth)acryliques à fonctionnalité carboxyle et/ou les polyesters à fonctionnalité carboxyle, la fonctionnalité carboxyle de chacun correspondant à un indice d'acide de 20 à 300 mg KOH/g, et
de 20 à 80 % en poids d'un ou plusieurs agents de réticulation B) à fonctionnalité époxyde, les pourcentages en poids de A) et de B) donnant un total de 100 % en poids,
de 0 à 30 % en poids d'un ou plusieurs polyols polymères C), par rapport à la somme des poids des composants A et B),
de 0 à 20 % en poids d'autres agents de réticulation E), différents de A), de B) et de C), par rapport à la somme des poids de A), de B) et de C),
de 0 à 10 % en poids d'un ou plusieurs monoépoxydes F), par rapport à la somme des poids de A) et de B), et
de 0,1 à 3 % en poids, par rapport à l'extrait sec de résine, d'un ou plusieurs dérivés de l'urée D), solides, finement divisés, insolubles dans l'agent de revêtement, préparés au préalable en présence d'au moins une partie du ou des agents de réticulation B) à fonctionnalité époxyde, et servant d'agent anti-coulure,
toutes les indications de pourcentages en poids étant rapportées à l'extrait sec.

2. Agent de revêtement selon la revendication 1, **caractérisé en ce que** la préparation des dérivés de l'urée D) finement divisés s'effectue par réaction d'amines et d'isocyanates, en présence d'au moins une partie des agents de réticulation B) à fonctionnalité époxyde et éventuellement d'un solvant organique.

3. Agents de revêtement selon l'une des revendications 1 ou 2, **caractérisé en ce que** les dérivés de l'urée D) sont préparés en une quantité, dans le composant B) et éventuellement le solvant, telle que la teneur des dispersions formées en les dérivés de l'urée D) soit de 0,5 à 10 % en poids par rapport à l'extrait sec du composant agent de réticulation B) à fonctionnalité époxyde.

4. Agent de revêtement selon l'une des revendications 1 à 3, **caractérisé en ce que** les dérivés solides de l'urée D) ont une granulométrie de 0,1 à 20 µm.

5. Procédé de préparation de revêtements multicouches, **caractérisé en ce qu'**on utilise pour préparer une couche de vernis de finition un agent de revêtement selon l'une des revendications 1 à 4.

6. Procédé selon la revendication 5, **caractérisé en ce qu'**on prépare en tant que couche de vernis de finition une couche de vernis transparent.

7. Utilisation des agents de revêtement selon l'une des revendications 1 à 4 pour préparer des systèmes de peinture multicouches sur des véhicules à moteur.

8. Utilisation des agents de revêtement selon la revendication 7 pour fabriquer des couches de vernis transparent.
